# EUROPEAN PATENT APPLICATION

(11) **EP 4 712 216 A1**
(43) Date of publication of application: **18.03.2026**
(21) Application number: 24828715.3
(22) Date of filing: 16.10.2024
(51) Int. Cl.: H01M 50/103, H01M 50/15

(54) **BATTERY CASE, BATTERY CELL AND BATTERY PACK**

(30) Priority: 24.07.2024 CN 202421773625 U
(71) Applicant: Eve Power Co., Ltd., Jingmen, Hubei 448000 (CN)
(72) Inventor: SUN, Yonghui, Hubei 448000 (CN); HUANG, Xiaoming, Hubei 448000 (CN); FAN, Daisong, Hubei 448000 (CN); CHEN, Xianyang, Hubei 448000 (CN); HOU, Kuishen, Hubei 448000 (CN); WANG, Zhiguo, Hubei 448000 (CN); WANG, Shifeng, Hubei 448000 (CN); LIU, Jincheng, Hubei 448000 (CN)
(74) Representative: Berggren Oy
(86) International application number: PCT/CN2024/125303
(87) International publication number: WO 2026/020601

(57) **Abstract**

A battery shell, a single battery cell, and a battery pack are provided. The battery shell includes: a battery shell body, wherein the battery shell body is provided with an opening; and a top cover body, wherein the top cover body is covered on the battery shell body at the opening, an end surface, facing the top cover body, of the battery shell body is defined as an upper end surface, and the upper end surface is divided into a first area and a second area located at an outer side of the first area towards an edge; the top cover body is assembled on the first area of the battery shell body, and a welding gap is formed between the second area of the battery shell body and an outer edge of the top cover body.

## Description

This application claims priority to and the benefit of Chinese Patent Application No. 2024217736257, filed on July 24, 2024 to the China Patent Office, the content of which is incorporated herein by reference in its entirety.

### TECHNICAL FIELD

The application relates to the field of battery technologies, and in particular, to a battery shell, a single battery cell, and a battery pack.

### BACKGROUND

Depending on the size and structure of batteries, welding processes for sealing a top cover of square aluminum-shell batteries can be classified into two types: a vertical welding process of the top cover and a side welding process of the top cover.

### SUMMARY

### TECHNICAL PROBLEM

In the actual process of welding the top cover, since modules are formed by assembling multiple single battery cells, the side welding process of the top cover in the existing art can easily cause friction between adjacent modules due to a high welding protrusion formed on one side.

### TECHNICAL SOLUTION

According to a first aspect, the present application provides a battery shell, including:
a battery shell body, wherein the battery shell body is provided with an opening; and
a top cover body, wherein the top cover body is covered on the battery shell body at the opening, an end surface, facing the top cover body, of the battery shell body is defined as an upper end surface, and the upper end surface is divided into a first area and a second area located at an outer side of the first area towards an edge;
the top cover body is assembled on the first area of the battery shell body, and a welding gap is formed between the second area of the battery shell body and an outer edge of the top cover body.

According to a second aspect, the present application provides a single battery cell including a battery shell mentioned above, and the battery shell is in a shape of rectangle.

According to a third aspect, the present application provides a battery pack including a single battery cell mentioned above.

### BENEFICIAL ADVANTAGES

According to the present application, the battery shell solves the friction problem between modules due to a high welding protrusion formed on one side during a traditional side welding process, offering an advantage of a low welding protrusion. Additionally, it solves the problem of low voltage resistance in vertically welded large battery cells, providing an advantage of a high welding strength.

### BRIEF DESCRIPTION OF THE DRAWINGS

FIG. 1 is a schematic diagram of the structure of a battery shell according to the embodiments of the present application;
FIG. 2 is an enlarged partial view at part A in FIG. 1;
FIG. 3 is a front schematic diagram of the structure of the battery shell according to the embodiments of the present application;
FIG. 4 is an enlarged partial view of part B in FIG. 3;
FIG. 5 is a top schematic diagram of the structure of the battery shell according to the embodiments of the present application; and
FIG. 6 is a front sectional view of the internal structure of the battery shell according to the embodiments of the present application.

In the accompanying drawings: 1 - battery shell body, 11 - first area, 12 - second area, 2 - top cover body, 21 - assembly slot, 22 - outer edge, 3 - welding gap.

### DETAILED DESCRIPTION

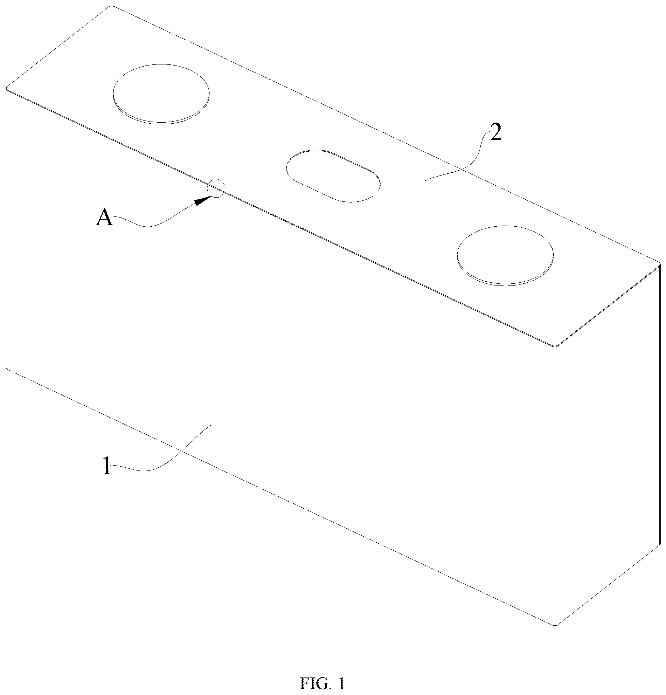

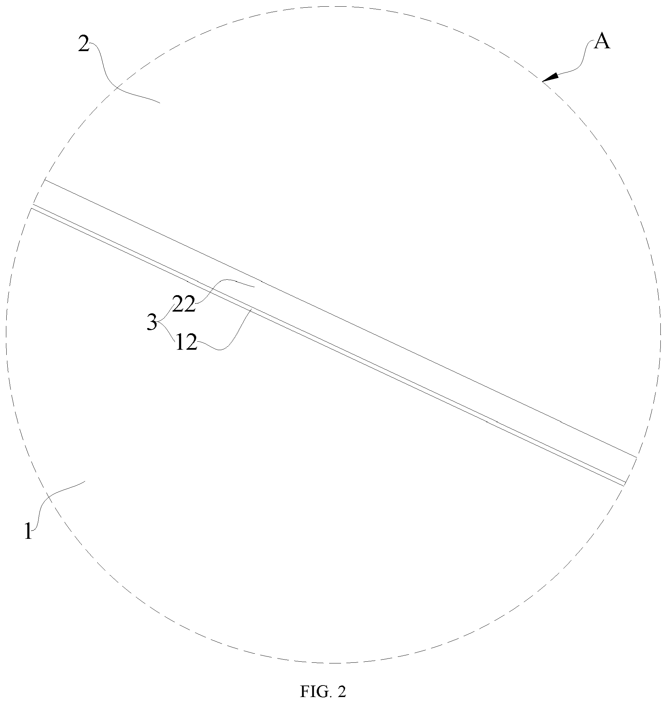

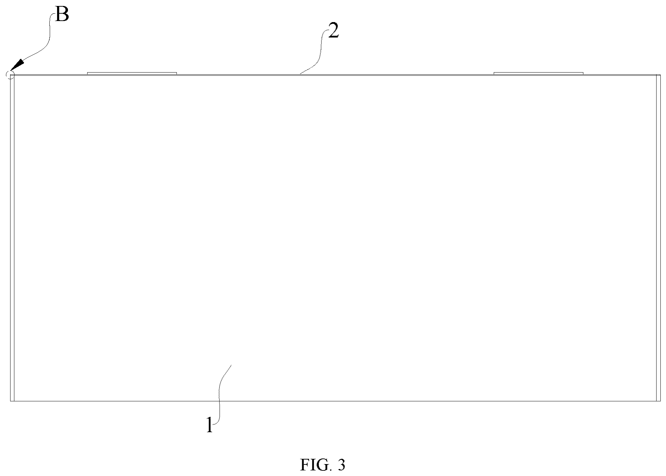

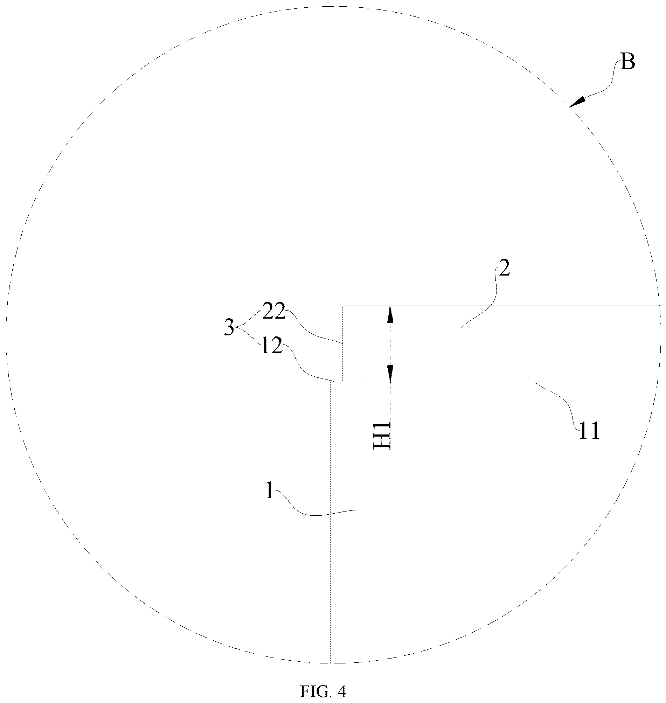

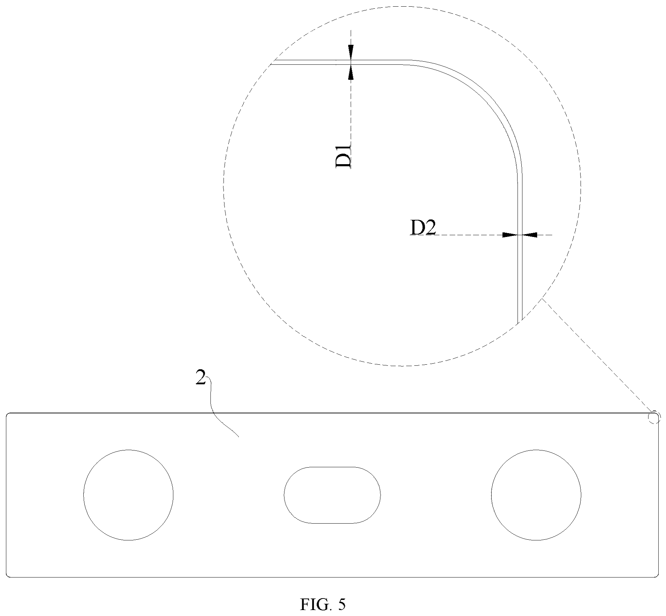

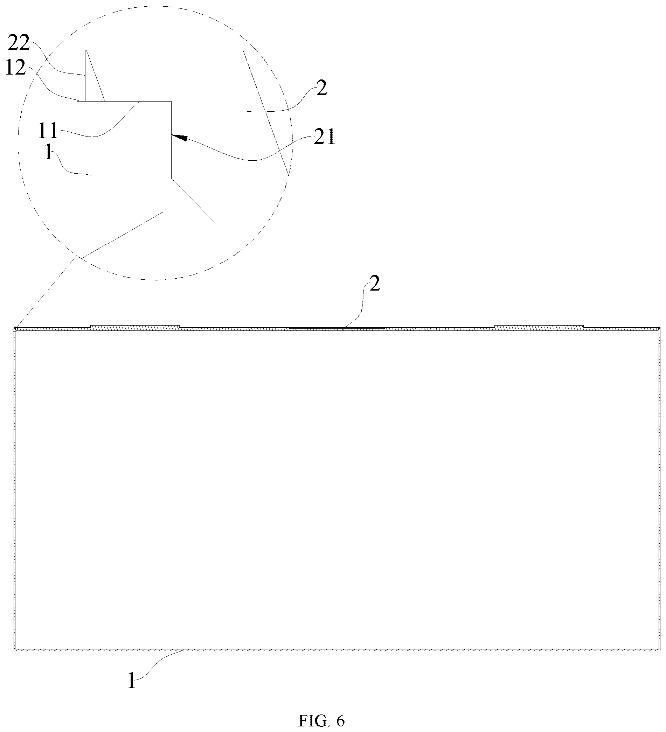

The embodiments of the present application disclose a battery shell. Specifically, in reference to FIG. 1 to FIG. 6, the battery shell includes a battery shell body 1, and the battery shell body 1 is provided with an opening. In the illustrated embodiments, a cavity for assembling battery cells is formed inside the battery shell body 1, and the cavity extends upward to an upper end surface of the battery shell body 1 and creates the opening.

Specifically, the battery shell further includes a top cover body 2, and the top cover body 2 is covered on the battery shell body 1 at the opening. An end surface, facing the top cover body 2, of the battery shell body 1 is defined as an upper end surface, and the upper end surface is divided into a first area 11 and a second area 12 located at an outer side of the first area 11 towards an edge. The top cover body 2 is covered on the first area 11 of the battery shell body 1, and a welding gap 3 is formed between the second area 12 of the battery shell body 1 and an outer edge 22 of the top cover body 2.

The side welding protrusion formed during the existing side welding process is high, which easily causes friction between adjacent modules. Therefore, to solve the above problem, the battery shell according to this application is formed with a welding gap 3 between the battery shell body 1 and the top cover body 2. As a result, in the process of side welding the top cover, a weld seam generated during the welding is filled in the welding gap 3, which increases a contacting distance between the welding protrusions of adjacent modules, and helps to solve the friction problem between adjacent modules. Moreover, the welding process adopts side welding technique, which addresses the problem of low voltage resistance in large battery cells with vertical welding, providing the advantage of a higher welding strength.

In summary, the battery shell according to the present application solves the friction problem between modules due to a high welding protrusion formed on one side during a traditional side welding process, offering an advantage of a low welding protrusion. Additionally, it solves the problem of low voltage resistance in vertically welded large battery cells, providing an advantage of a high welding strength.

It should be noted that the welding gap 3 can specifically be formed by the upper end surface of the second area 12 of the battery shell body 1 and the outer edge 22 of the top cover body 2, thereby forming a stepped structure.

It was found in actual welding that the side welding protrusion in existing designs typically extend 0.15 mm or more beyond the outer wall of the battery shell body 1, leading to potential friction issues. Through multiple experiments with varying sizes of the welding protrusion, it was determined that limiting the size of the welding protrusion to within 0.1 mm effectively solves the friction problem. Therefore, there are specific requirements for the width of the welding gap 3.

In some embodiments, a width D1 of the welding gap 3 in a width direction of the battery shell ranges from 0.05 mm ≤ D1 ≤ 0.15 mm, and a width D2 of the welding gap 3 in a length direction of the battery shell ranges from 0.05 mm ≤ D2 ≤ 0.15 mm. The reason for selecting the width D1 and the width D2 of the welding gap 3 within the range of 0.05 mm to 0.15 mm lies in the actual size of the welding protrusion. The actual size of the welding protrusion typically extends to 0.15 mm or more. For example, when the actual welding protrusion is 0.15 mm, it can be reduced to 0.1 mm by setting the width D1 and the width D2 of the welding gap 3 according to this application to a minimum value of 0.05 mm, effectively solving the friction problem. Furthermore, for example, in a rare case where the actual welding protrusion is 0.25 mm, the width D1 and the width D2 of the welding gap 3 can be set to a maximum value of 0.15 mm, allowing for greater tolerance while still ensuring that the welding protrusion is reduced to 0.1 mm, effectively addressing the friction problem.

The width D1 of the welding gap 3 can be any of the following values: 0.05 mm, 0.06 mm, 0.07 mm, 0.08 mm, 0.09 mm, 0.1 mm, 0.11 mm, 0.12 mm, 0.13 mm, 0.14 mm, or 0.15 mm. In other embodiments, the width D1 of the welding gap 3 may also take other values within the range of 0.05 mm ≤ D1 ≤ 0.15 mm.

The width D2 of the welding gap 3 can be any of the following values: 0.05 mm, 0.06 mm, 0.07 mm, 0.08 mm, 0.09 mm, 0.1 mm, 0.11 mm, 0.12 mm, 0.13 mm, 0.14 mm, or 0.15 mm. In other embodiments, the width D2 of the welding gap 3 may also take other values within the range of 0.05 mm ≤ D2 ≤ 0.15 mm.

In some embodiments, the width D1 of the welding gap 3 ranges from 0.05 mm ≤ D1 ≤ 0.1 mm, and the width D2 of the welding gap 3 ranges from 0.05 mm ≤ D2 ≤ 0.1 mm. In actual welding process, the existing side welding protrusions are typically between 0.15 mm to 0.2 mm. Therefore, the width D1 and the width D2 of the welding gap 3 can be controlled within the range of 0.05 mm to 0.1 mm. This setting can provide sufficient space for the welding gap 3 to accommodate the weld protrusion, while also ensuring a connection strength between the battery shell body 1 and the top cover body 2.

In some embodiments, the width D1 of the welding gap 3 equals 0.1mm, and the width D2 of the welding gap 3 equals 0.1mm. This setting can form a structure with equal dimensions around the welding gap 3, and the dimensions are all 0.1 mm. The structure is simple and easy to manufacture, and reduces manufacturing difficulty.

In some embodiments, the width of the welding gap 3 in the width direction of the battery shell is D1, and the width of welding gap 3 in the length direction of the battery shell is D2, and D1 = D2. This setting can form a structure with equal dimensions around the welding gap 3, which is simple in structure and easy to manufacture, and reduces manufacturing difficulty.

In some embodiments, a height H1 between a top of battery shell body 1 and a top of top cover body 2 in a height direction of the battery shell ranges from 0.4 mm ≤ H1 ≤ 0.8 mm. This setting can provide sufficient space for the welding gap 3 to accommodate the weld protrusion, while also ensuring the connection strength between the battery shell body 1 and the top cover body 2.

The height H1 between the top of the battery shell body 1 and the top of the top cover body 2 can be any of the following values: 0.5 mm, 0.6 mm, 0.7 mm, or 0.8 mm. In other embodiments, the height H1 between the top of the battery shell body 1 and the top of the top cover body 2 may also be other values within the range of 0.4 mm ≤ H1 ≤ 0.8 mm.

In some embodiments, an assembly slot 21 is formed on a surface, facing the battery shell body 1, of the top cover body 2, and the top cover body 2 is clipped on the opening of the battery shell body 1 through the assembly slot 21. In the illustrated embodiment, the assembly slot 21 is formed on a bottom, facing the battery shell body 1, of the top cover body 2. This configuration allows for a formation of a stable chip-on structure through the assembly slot 21, ensuring that the top cover body 2 can be securely fixed on the opening of the battery shell body 1, thereby enhancing the overall structural stability.

The embodiments of the present application also disclose a single battery cell, including the above-mentioned battery shell. Therefore, it can be seen that the singe battery cell according to the present application can effectively avoid the protrusion of side welding seams, thereby addressing the friction problem between adjacent modules, providing the advantage of a low welding protrusion. Moreover, the welding process adopts a side welding technique, which addresses the problem of low voltage resistance in large battery cells with vertical welding, providing the advantage of a higher welding strength.

In some embodiments, the battery shell is in a shape of rectangle for an improved structural stability.

The embodiments of the present application also disclose a battery pack including the above-mentioned single battery cell. Multiple battery cells can be combined to form a module, and this battery pack can include multiple modules. Therefore, the battery pack according to the present application can effectively avoid the protrusion of side welding seams, thereby addressing the friction problem between adjacent modules, providing the advantage of a low welding protrusion. Moreover, the welding process adopts side welding technique, which addresses the problem of low voltage resistance in large battery cells with vertical welding, providing the advantage of a higher welding strength.

## Claims

1. A battery shell, comprising:
a battery shell body (1), wherein the battery shell body (1) is provided with an opening; and
a top cover body (2), wherein the top cover body (2) is covered on the battery shell body (1) at the opening, an end surface, facing the top cover body (2), of the battery shell body (1) is defined as an upper end surface, and the upper end surface is divided into a first area (11) and a second area (12) located at an outer side of the first area (11) towards an edge;
wherein the top cover body (2) is assembled on the first area (11) of the battery shell body (1), and a welding gap (3) is formed between the second area (12) of the battery shell body (1) and an outer edge (22) of the top cover body (2).

2. The battery shell according to claim 1, wherein in a width direction of the battery shell, a width D1 of the welding gap (3) ranges from 0.05 mm ≤ D1 ≤ 0.15 mm; and
in a length direction of the battery shell, a width D2 of the welding gap (3) ranges from 0.05 mm ≤ D2 ≤ 0.15 mm.

3. The battery shell according to claim 2, wherein the width D1 of the welding gap (3) ranges from 0.05 mm ≤ D1 ≤ 0.1 mm, and the width D2 of the welding gap (3) ranges from 0.05 mm ≤ D2 ≤ 0.1 mm.

4. The battery shell according to claim 3, wherein the width D1 of the welding gap (3) is 0.1 mm, and the width D2 of the welding gap (3) is 0.1 mm.

5. ,The battery shell according to claim 1, wherein in a width direction of the battery shell, a width of the welding gap (3) is D1, and in a length direction of the battery shell, a width of the welding gap (3) is D2, and D1 = D2.

6. The battery shell according to any one of claims 1 to 5, wherein in a height direction of the battery shell, a height H1 between a top of the battery shell body (1) and a top of the top cover body (2) satisfies 0.4 mm ≤ H1 ≤ 0.8 mm.

7. The battery shell according to claim 6, wherein the height H1 between the top of the battery shell body (1) and the top of the top cover body (2) is 0.6 mm.

8. The battery shell according to any one of claims 1 to 5, wherein an assembly slot (21) is formed on a bottom, facing the battery shell body (1), of the top cover body (2), and the top cover body (2) is clipped on the opening of the battery shell body (1) through the assembly slot (21).

9. A single battery cell, comprising the battery shell according to any one of claims 1 to 8, wherein the battery shell is in a shape of rectangle.

10. A battery pack comprising the single battery cell according to claim 9.
